# EUROPÄISCHE PATENTSCHRIFT

(11) **EP 2 616 289 B1**
(45) Veröffentlichungstag und Bekanntmachung des Hinweises auf die Patenterteilung: **27.04.2016**
(21) Anmeldenummer: 11739058.3
(22) Anmeldetag: 02.08.2011
(51) Int. Cl.: B60S 1/34

(54) **GUSSBEFESTIGUNGSVORRICHTUNG FÜR EINEN WISCHARM**
CAST FIXING DEVICE FOR A WIPER ARM
DISPOSITIF DE FIXATION MOULÉ POUR UN BRAS D'ESSUIE-GLACE

(30) Priorität: 16.09.2010 DE 102010040878
(43) Veröffentlichungstag der Anmeldung: 24.07.2013
(73) Patentinhaber: Robert Bosch GmbH, 70442 Stuttgart (DE)
(72) Erfinder: BECKER, Ewald, 77815 Buehl (DE); KRAEMER, Godelieve, 76549 Huegelsheim (DE)
(86) Internationale Anmeldenummer: PCT/EP2011/063317
(87) Internationale Veröffentlichungsnummer: WO 2012/034776

(56) Entgegenhaltungen:
- DE-A1- 3 829 466
- DE-A1- 10 010 174
- US-A- 4 932 097

## Beschreibung

Die Erfindung betrifft eine Gussbefestigungsvorrichtung für einen Wischarm, mit einer ersten Aufnahme und einer zweiten Aufnahme, wobei in der ersten Aufnahme eine Lagerbuchse zur Bereitstellung einer gelenkigen Verbindung an dem Wischarm angeordnet ist und in der zweiten Aufnahme ein Haltestift zur Befestigung einer Feder des Wischarms angeordnet sind,

### Stand der Technik

Aus der DE 100 10 174 A1 ist ein Gussbefestigungsteil für einen Scheibenwischarm bekannt. Das Gussbefestigungsteil weist eine Durchgangsöffnung für eine Lagerbuchse und eine Aufnahme für einen Haltestift auf. Die Aufnahme für den Haltestift ist nutförmig ausgebildet und an den Stirnseiten geschlossen. Der Haltestift ist in montiertem Zustand in die Aufnahme eingelegt, wobei mittels eines Verformungsstempels ein Bereich oberhalb des Haltestifts so verformt wird, dass wenigstens eine Nase erzeugt wird, die den Haltestift in seiner Lage befestigt.

Aus der DE 38 29 466 A1 und der US 4,932,097 A sind Sicherungselemente zur Sicherung eines Lagerstiftes in einer Scheibenwischervorrichtung bekannt.

### Offenbarung der Erfindung

Es ist Aufgabe der Erfindung, eine verbesserte Möglichkeit zur Sicherung und Befestigung eines Haltestifts oder einer Lagerbuchse in einer Gussbefestigungsvorrichtung für einen Wischarm oder einen Wischarm mit solch einer Gussbefestigungsvorrichtung bereitzustellen.

Diese Aufgabe wird durch eine Gussbefestigungsvorrichtung für einen Wischarm gemäß Anspruch 1 und durch einen Wischarm gemäß Anspruch 8 gelöst. Weiterer vorteilhafte Ausführungsformen sind in den abhängigen Ansprüchen angegeben.

Erfindungsgemäß wird eine Gussbefestigungsvorrichtung für einen Wischarm mit einer ersten Aufnahme und einer zweiten Aufnahme vorgeschlagen. In der ersten Aufnahme ist eine Lagerbuchse zur Bereitstellung einer gelenkigen Verbindung an dem Wischarm angeordnet. In der zweiten Aufnahme ist ein Haltestift zur Befestigung einer Feder des Wischarms angeordnet. Über der Lagerbuchse in der ersten Aufnahme und/oder über dem Haltestift in der zweiten Aufnahme ist ein Sicherungselement vorgesehen, das eine Öffnung der korrespondierenden Aufnahme versperrt.

Diese Ausgestaltung ermöglicht eine einfache Sicherung und Befestigung des Haltestifts oder der Lagerbuchse in einer nutförmigen Aufnahme der Gussbefestigungsvorrichtung eines Wischarms. Besonders vorteilhaft ist, wenn sowohl der Haltestift als auch die Lagerbuchse mit jeweils einem Sicherungselement in der korrespondierenden Aufnahme gesichert werden. Dies gewährleistet eine Auswechselfähigkeit des Haltestifts und der Lagerbuchse bei Beschädigung oder bei Abnutzung.

In einer weiteren Ausführungsform der Erfindung weist das Sicherungselement einen Mittelteil mit einem bogenförmigen Querschnitt auf. Eine dem Haltestift oder der Lagerbuchse zugeordnete Innenkontur des Mittelteils ist dabei an eine korrespondierende Außenkontur des Haltestifts oder der Lagerbuchse angepasst. Diese Ausgestaltung ermöglicht eine stabile Befestigung und Sicherung des Haltestifts oder der Lagerbuchse in der Aufnahme durch das Sicherungselement.

In einer weiteren Ausführungsform ist seitlich an dem Mittelteil des Sicherungselements jeweils ein Federabschnitt angeordnet, wobei jeder Abschnitt abstehend vom Mittelteil ausgebildet und ausgelegt ist, sich in der Aufnahme zu verspreizen. Diese Ausgestaltung gewährleistet eine zuverlässige Befestigung des Sicherungselements an den Seitenflächen der Aufnahme.

In einer weiteren Ausführungsform weist die Aufnahme eine erste Seitenfläche und eine zweite Seitenfläche auf, wobei die erste Seitenfläche zu der zweiten Seitenfläche V-förmig angeordnet ist, und wobei die erste Seitenfläche mit der zweiten Seitenfläche über einen U-förmigen Abschnitt verbunden ist. Diese Ausgestaltung der Aufnahme für den Haltestift oder die Lagerbuchse stellt eine gusstechnisch günstige Ausführungsform der Aufnahme dar, wobei das Einlegen der Lagerbuchse bzw. des Haltestifts in die Aufnahme erleichtert ist.

In einer weiteren Ausführungsform erstreckt sich das Sicherungselement im Wesentlichen axial über die gesamte Länge der Aufnahme. Diese Ausgestaltung gewährleistet eine zuverlässige Sicherung des Haltestifts bzw. des Lagerbolzens in der Aufnahme.

Erfindungsgemäß wird die Aufgabe auch durch einen Wischerarm mit einem Befestigungsteil, einem Armteil und einem Wischblatt gelöst, wobei der Armteil ein an einer Wischerwelle eines Wischerantriebs anliegendes Drehmoment an das Befestigungsteil überträgt. Das Befestigungsteil ist ausgelegt, das Wischblatt an eine Windschutzscheibe eines Kraftfahrzeugs anzudrücken, wobei das Befestigungsteil eine oben erläuterte Gussbefestigungsvorrichtung zur Verbindung des Befestigungsteils mit dem Armteil umfasst.

Diese Ausgestaltung ermöglicht eine zuverlässige und fertigungsgünstige Sicherung der Lagerbuchse und des Haltestifts im Befestigungsteil des Wischarms.

In einer weiteren Ausführungsform ist die Lagerbuchse zweiteilig ausgeführt, wobei jeweils ein Teil der Lagerbuchse in einem axialen Endabschnitt der zweiten Aufnahme der Lagerbuchse angeordnet ist. Diese Ausgestaltung ermöglicht eine materialarme Ausgestaltung der Lagerbuchse und somit einen massenarmen Wischarm.

In einer weiteren Ausführungsform ist die Öffnungsrichtung der ersten Aufnahme und/oder der zweiten Aufnahme in einem spitzen Winkel zu der am Haltestift oder an der Lagerbuchse angreifenden Kraft ausgerichtet. Diese Ausgestaltung ermöglicht eine kraftgünstige Abstützung der Kräfte am Haltestift bzw. an der Lagerbuchse.

Nachfolgend wird die Erfindung anhand von Figuren näher erläutert. Dabei zeigen:
Figur 1 eine perspektivische Ansicht eines Wischerarms mit einem Befestigungsteil;
Figur 2 einen Längsschnitt durch das in Figur 1 gezeigte Befestigungsteils des Wischarms;
Figur 3 einen Querschnitt durch das in Figur 1 gezeigte Befestigungsteil des Wischarms;
Figur 4 einen Längsschnitt durch das Befestigungsteil in unmontiertem Zustand;
Figur 5 einen Längsschnitt durch das Befestigungsteil nach einem ersten Montageschritt;
Figur 6 einen Längsschnitt durch das Befestigungsteil in einem zweiten Montageschritt;
Figur 7 einen Längsschnitt durch einer alternativen Ausführungsform des in Figur 2 gezeigten Befestigungsteils;
Figur 8 einen Längsschnitt durch eine weitere alternative Ausführungsform des in Figur 4 gezeigten Befestigungsteils in unmontiertem Zustand;
Figur 9 das in Figur 8 gezeigte Befestigungsteil in fertig montiertem Zustand;
Figur 10 einen Querschnitt durch das in Figur 9 gezeigte Befestigungsteil an einer Lagerbuchse; und
Figur 11 einen Querschnitt einer alternative Lagerbuchse.

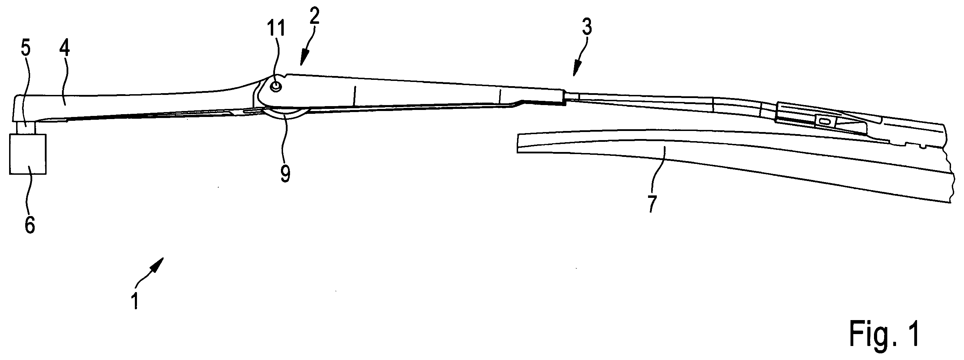

Figur 1 zeigt eine perspektivische Ansicht eines Wischarms 1. Der Wischarm 1 umfasst ein Befestigungsteil 4, das auf einer Wischerwelle 5 eines Wischantriebs 6 befestigt ist. An dem Befestigungsteil 4 ist ferner gelenkig ein Armteil 3 angeordnet, wobei an dem Armteil 3 ein Wischerblatt 7 angeordnet ist. Um die gelenkige Verbindung zwischen dem Befestigungsteil 4 und dem Armteil 3 bereitzustellen, ist an dem Befestigungsteil 4 eine Gussbefestigungsvorrichtung 2 vorgesehen, die sowohl eine erste Aufnahme 15 für eine Lagerbuchse 12 sowie eine zweite Aufnahme 16 für einen Haltestift 10 umfasst. Durch die Lagerbuchse 12 der Gussbefestigungsvorrichtung 2 ist ein Lagerbolzen 11 geführt, der das Armteil 3 mit dem Befestigungsteil 4 verbindet. Eine unterseitig angeordnete Feder 9 ist an ihrem ersten Ende an dem Haltestift 10 eingehängt, wobei eine zweites Ende der Feder 9 mit dem Armteil 3 verbunden ist. Auf diese Weise wird das Armteil 3 gegen eine Windschutzscheibe eines Kraftfahrzeugs gedrückt, um so eine ausreichend hohe Anpresskraft für das Wischblatt 7 an der Windschutzscheibe bereitzustellen.

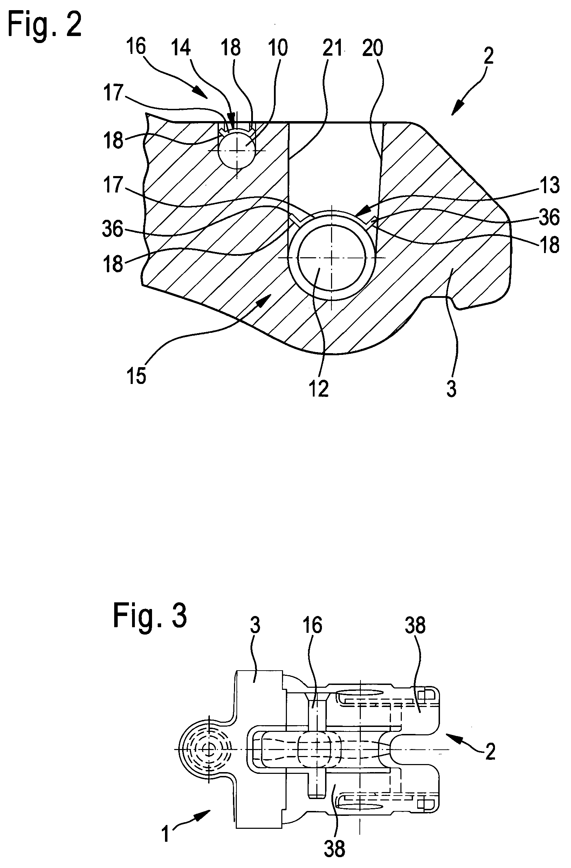

Figur 2 zeigt einen Längsschnitt durch das Befestigungsteil 4 des in Figur 1 gezeigten Wischarms 1. Das Befestigungsteil 4 umfasst die Gussbefestigungsvorrichtung 2 mit einer ersten nutförmigen Aufnahme 15 mit der darin angeordneten Lagerbuchse 12 und eine zweite nutförmige Aufnahme 16 mit dem darin angeordneten Haltestift 10. Über der Lagerbuchse 12 ist ein erstes Sicherungselement 13 der Gussbefestigungsvorrichtung 2 vorgesehen, das ein Lösen der Lagerbuchse 12 aus der ersten Aufnahme 15 vermeidet. Der Haltestift 10 ist mittels eines zweiten Sicherungselements 14 der Gussbefestigungsvorrichtung 2 in der zweiten Aufnahme 16 gegen ein ungewolltes Lösen gesichert.

Das erste und das zweite Sicherungselement 13, 14 der Gussbefestigungsvorrichtung 2 weisen jeweils einen Mittelteil 17 auf, an dem seitlich jeweils ein Federabschnitt 18 angeordnet ist, auf. Der Mittelteil 17 weist eine Innenkontur 19, die dem Lagerbolzen 12 bzw. dem Haltestift 10 zugewandt ist, auf, wobei die Innenkontur 19 derart ausgebildet ist, dass sie im Wesentlichen über den gesamten Abschnitt des Mittelteils 17 an einem ihr zugewandten Teil der Umfangsfläche des Lagerbolzens 12 bzw. des Haltestifts 10 anliegt. An den bogenförmigen Mittelteil 17 schließen sich seitlich die Federabschnitte 18 an, wobei die Federabschnitte 18 von dem Mittelteil 17 abstehend ausgebildet sind.

In der in Figur 2 gezeigten Ausführungsform stehen die Federabschnitte 18 etwa im 90°-Winkel zu einer Tangente T des Mitteilteils 17 in den Punkten, in denen die Federabschnitte 18 an dem Mittelteil 17 befestigt sind, ab. Alternativ sind aber auch spitze Winkel zur Anordnung der Federabschnitte 18 an dem Mittelteil 17 denkbar. Die Federabschnitte 18 der Sicherungselemente 13, 14 sind in ihrer Länge derart gewählt, dass die Federabschnitte 18 mit einem Federabschnittsende 36 in ihrer endgültigen Montageposition an einer Seitenwand 20, 21 der Aufnahme 15, 16 der Gussbefestigungsvorrichtung 2 anliegen bzw. sich mit einem jeweiligen Federabschnittsende 36 an der korrespondierenden Seitenwand 20, 21 verkeilen. Dabei versperrt das Sicherungselement 13, 14 die Aufnahme 15, 16 in Öffnungsrichtung. Diese Ausgestaltung stellt eine zuverlässige Sicherung der Lagerbuchse 12 bzw. des Haltestifts 10 dar, da ein unbeabsichtigtes Herausgleiten der Lagerbuchse 12 bzw. des Haltestifts 10 durch das Sicherungselement 13, 14 zuverlässig vermieden wird. Ferner ist durch die Sicherungselemente 13, 14 eine Demontagemöglichkeit für den Haltestift 10 bzw. der Lagerbuchse 12 in den korrespondierenden Aufnahmen 15, 16 gegeben.

Je nach Ausbildungsform der Federabschnitte 18 der Sicherungselemente 13, 14 und der entsprechend zugehörigen Verkeilungskräfte der Federabschnitte 18 an den Seitenwänden 20, 21 kann das Sicherungselement 13, 14 zur Sicherung oder auch zur Befestigung der Lagerbuchse 12 bzw. des Haltestifts 10 dienen. In der in Figur 2 gezeigten Ausführungsform sind die Aufnahmen 15, 16 der Lagerbuchse 12 bzw. des Haltestifts 10 derart ausgebildet, dass die Lagerbuchse 12 bzw. der Haltestift 10 in einer endgültigen Position mittels einer kraftschlüssigen Verbindung, insbesondere eines Presssitzes seitlich an den Seitenwänden 20, 21 bzw. an einem bogenförmigen Abschnitt 22 der nutförmigen Aufnahmen 15, 16 befestigt ist.

Zur erleichterten Montage des Wischarms 1 und um einen zuverlässigen Kraftschluss zwischen den Aufnahmen 15, 16 zu der Lagerbuchse 12 bzw. dem Haltestift 10 zu gewährleisten, ist eine erste Seitenwand 20 der ersten Aufnahme 15 zu einer zweiten Seitenwand 21 der ersten Aufnahme 15 V-förmig angeordnet, wobei die unteren Enden der Seitenwände 20, 21 über den bogenförmigen Abschnitt 22 verbunden sind. Der bogenförmige Abschnitt 22 weist in der Ausführungsform einen geringfügig kleineren Radius als die Lagerbuchse 12 auf, um so die Lagerbuchse 12 zu befestigen. Insbesondere ist ein Winkel von 1° bis 4° Neigung der ersten Seitenwand 20 zu der Seitenwand 21 günstig, um die Lagerbuchse 12 in die erste Aufnahme 15 erleichtert einzulegen. Die für die erste Aufnahme 15 der Gussbefestigungsvorrichtung 2 beschriebene Ausgestaltung gilt in gleicher Weise für die zweite Aufnahme 16 der Gussbefestigungsvorrichtung 2.

In der Ausführungsform erstrecken sich die Sicherungselemente 13, 14 über die gesamte Länge der Aufnahmen 15, 16 bzw. die darin angeordnete Lagerbuchse 12 oder Haltestift 10. Alternativ sind aber auch mehrere Sicherungselemente 13, 14 in den Aufnahmen 15, 16 denkbar. Diese werden bevorzugterweise im Bereich der axialen Enden der Lagerbuchse 12 bzw. des Haltestifts 10 angeordnet, um diese in der Aufnahme 15, 16 zu sichern bzw. zu befestigen. Ferner kann das Sicherungselement 13, 14 eine nichtdargestellte Öffnung aufweisen, um das Sicherungselement 13, 14 erleichtert aus der entsprechenden Aufnahme 15, 16 zu entfernen.

Die Sicherungselemente 13, 14 sind in der gezeigten Ausführungsform aus Federstahl ausgeführt, wobei diese beispielsweise in einem Stanz-Biegeverfahren herstellbar sind. Alternativ können die Sicherungselemente 13, 14 aber auch aus anderen Werkstoffen gefertigt werden. Insbesondere eignen sich hierfür Kunststoffe, beispielsweise ein thermoplastisch Kunststoff.

Figur 3 zeigt einen Querschnitt durch das in Figur 1 gezeigte Befestigungsteil 2 des Wischarms 1 auf Höhe einer Längsachse des Haltestifts 10. Die zweite Aufnahme 16 für den Haltestift 10 ist in zwei Schenkeln 38 des Befestigungsteils 4 angeordnet. Dabei ist die zweite Aufnahme 10 als teilweise abgesetzte Nut ausgeführt, die durch das Material der Schenkel 38 des Befestigungsteils 2 an einer Stirnseite einseitig verschlossen ist. Die zweite Aufnahme 10 ist auf der zum Wischblatt 7 abgewandten Seite des Befestigungsteils 2 geöffnet.

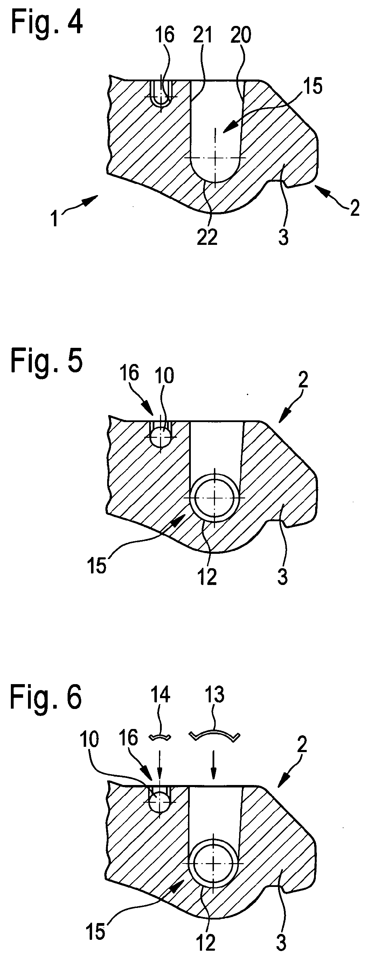

Figur 4 zeigt einen Längsschnitt durch das Befestigungsteil 4 in unmontiertem Zustand des Wischarms. Das Befestigungsteil 4 mit der Gussbefestigungsvorrichtung 2 ist in der Ausführungsform gegossen ausgeführt. Die Ausgestaltung der Aufnahmen 15, 16 für die Lagerbuchse 12 bzw. den Haltestift 10 gewährleistet eine gusstechnische günstige Ausgestaltung des Befestigungsteils 4 sowie eine kostengünstige Ausgestaltung der Gussform des Befestigungsteils 4. Durch die V-förmige Ausgestaltung der Aufnahmen 15, 16 kann auf eine obligatorische spanende Nachbearbeitung des Befestigungsteils 4 bzw. der Gussbefestigungsvorrichtung 2 zur Bereitstellung einer Maßgenauigkeit, beispielsweise zum Einpressen von Buchsen, verzichtet werden. Vorteilhafterweise sind die Aufnahmen 15, 16 für die Lagerbuchse 12 bzw. den Haltestift 10 auf einer Seite des Befestigungsteils 4 des Wischarms 1 angeordnet, so dass die Aufnahmen 15, 16 der Gussbefestigungsvorrichtung 2 bei einem Gussvorgang einfach entformbar aus einem Formteil einer Gussform sind. Ferner sind durch die in der Figur 4 gezeigte Ausgestaltung die Einhaltung eines vorgegebenen Toleranzbereiches für die Gussbefestigungsvorrichtung 2 am Wischarm 1 erleichtert.

Figur 5 zeigt das Befestigungsteil 4 nach einem ersten Montageschritt. In dem ersten Montageschritt werden oberseitig der Haltestift 10 bzw. die Lagerbuchse 12 in die dafür vorgesehenen Aufnahmen 15, 16 der Gussbefestigungsvorrichtung 2 eingelegt und mittels eines Werkzeugs bis zum Grund der Aufnahmen 15, 16 der Gussbefestigungsvorrichtung 2 des Befestigungsteils 4 gepresst.

Figur 6 zeigt das Befestigungsteil 4 in einem zweiten Montageschritt. Dabei wird das erste Sicherungselement 13 in die erste Aufnahme 15 zur Sicherung bzw. Befestigung der Lagerbuchse 12 eingelegt und verrastet bzw. verspannt. Ebenso wird das zweite Sicherungselement 14 in die zweite Aufnahme 10 des Befestigungsteils 4 zur Sicherung bzw. Befestigung des Haltestifts 10 eingefügt. Dabei werden die Sicherungselemente 13, 14 bis zur Berührung mit der Lagerbuchse 12 bzw. dem Haltestift 10 in die Aufnahmen 15, 16 gedrückt. Durch die zum Grund hin verjüngenden Aufnahmen 9, 10 wird die Verspreizung der Federelemente 18 der Sicherungselemente 13, 14 während des Zusammenbau des Wischarms 1 erhöht. Die beiden in den Figuren 5 und 6 gezeigten Montageschritte eignen sich insbesondere zur maschinellen Montage des Befestigungsteils 4, da diese 3 einfach von oben her in einem automatischen Vorgang bestückbar ist. Das fertig montierte Befestigungsteil 4 wurde in Figur 2 bereits näher erläutert.

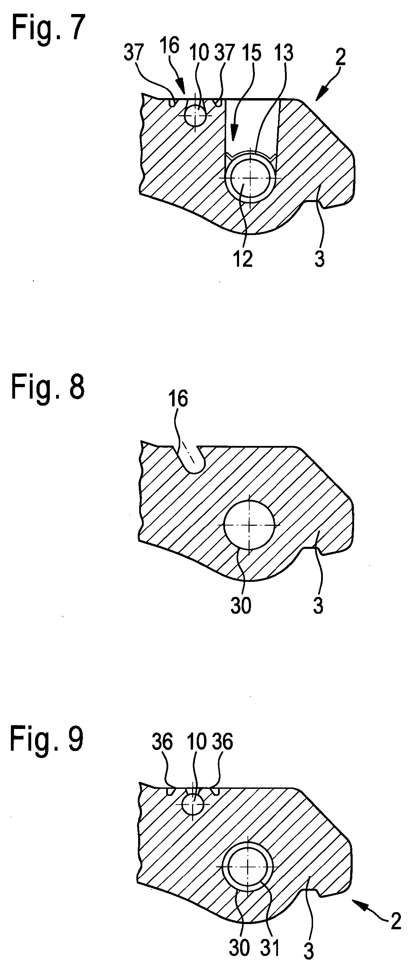

Figur 7 zeigt eine alternative Ausführungsform des Befestigungsteils 4. Dabei ist die Lagerbuchse 12 der Gussbefestigungsvorrichtung 2, wie bereits in den Figuren 2 bis 6 gezeigt, mittels des ersten Sicherungselements 13 in der ersten Aufnahme 15 der Gussbefestigungsvorrichtung 2 gesichert bzw. befestigt. Alternativ kann der Haltestift 10 in der zweiten Aufnahme 16 der Gussbefestigungsvorrichtung 2 auch mittels Verstemmen befestigt werden. Hierzu wird der Öffnungsquerschnitt der zweiten Aufnahme 16 reduziert, indem mit einem Verstemmwerkzeug nach dem Einlegen des Haltestifts 10 seitlich von der Aufnahme 16 zwei Einbuchtungen 37 in das Material des Befestigungsteils 2 gedrückt werden. Durch das Eindrücken verringert sich der Öffnungsquerschnitt der zweiten Aufnahme 16, so dass ein Herausgleiten des Haltestift 10 oberseitig aus der zweiten Aufnahme 16 vermieden wird. Die zwei Einbuchtungen 37 können auch quer zur Aufnahme 16, in den Schenkeln 39, gedrückt werden.

Figur 8 zeigt eine weitere alternative Ausführungsform des Befestigungsteils 4. Das Befestigungsteil 4 weist anstelle der in Figur 2 gezeigten nutförmigen ersten Aufnahme 15 der Gussbefestigungseinrichtung 2 eine Zylinderaufnahme 30 auf. Durch den Ersatz der ersten nutförmigen Aufnahme 15 durch die Zylinderaufnahme 30 wird in der Montage die Lagerbuchse 12 senkrecht stehend zur Zeichenebene in die Zylinderaufnahme 30 des Befestigungsteils 3 eingeschoben und eingepresst.

Die zweite Aufnahme 16 des Befestigungsteils 4 ist, wie in den Figuren 2 bis 6 erläutert, ausgebildet, wobei eine Öffnungsrichtung der zweiten Aufnahme 16 etwa in spitzem Winkel zu der am Haltestift 10 angreifenden Kraft der Feder 9 des Wischarms 1 ausgerichtet ist. Alternativ ist auch denkbar die erste Aufnahme 15 analog zur zweiten Aufnahme 16 auszubilden und die Öffnungsrichtung entsprechend auszurichten.

Figur 9 zeigt das in Figur 8 gezeigte Befestigungsteil 4 in fertig montiertem Zustand. Hierzu ist in der Zylinderaufnahme 30 eine Formbuchse 31 eingepresst. Ferner ist der Haltestift 10, wie bereits in Figur 7 erläutert, durch ein Verstemmen der zweiten Aufnahme 16 der Gussbefestigungsvorrichtung 2 am Befestigungsteil 3 befestigt.

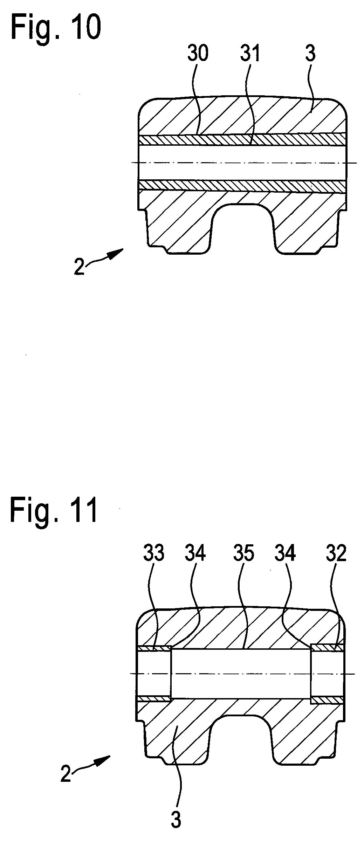

Figur 10 zeigt einen Querschnitt durch das Befestigungsteil 4 mit der Gussbefestigungsvorrichtung 2 entlang der Längsachse der in Figur 9 gezeigten Formbuchse 31. Die Formbuchse 31 ist in die Zylinderaufnahme 30 eingepresst und weist eine konische Ausgestaltung der Formbuchse 31 auf. Die Außenkontur der Formbuchse 31 und die korrespondierende Zylinderaufnahme 30 sind konisch ausgeführt, so dass ein verbessertes Verpressen der Formbuchse 31 in der Zylinderbuchse 30 bei der Montage gewährleistet ist.

Figur 11 zeigt eine alternative Ausführungsform der Formbuchse 31 des Befestigungsteils 3. Die Formbuchse 31 ist hierbei zweiteilig mit zwei Formbuchsenelementen 32, 33 ausgeführt, wobei jeweils ein Formbuchsenelement 32, 33 in einem Endabschnitt der ersten Aufnahme 15 bzw. einer alternativen Zylinderaufnahme 35 angeordnet ist. Dabei kann das Einschieben bzw. die Position der beiden Formbuchsenelemente 32, 33 durch jeweils einen Anschlag 34 begrenzt werden, der in der ersten Aufnahme 15 beidseitig vorgesehen ist.

Es wird darauf hingewiesen, dass die in den Figuren 1 bis 11 gezeigten Ausführungsformen beispielhaft sind. Selbstverständlich sind auch andere Ausführungsformen vorstellbar, welche weitere Abwandlungen bzw. Kombinationen der beschriebenen Merkmale umfassen können.

So ist etwa denkbar, dass die in Figuren 10 und 11 gezeigte einteilige bzw. zweiteilige Formbuchse 31, 32, 33 in der in Figur 4 gezeigten ersten Aufnahme 15 angeordnet ist. Dabei kann die erste Aufnahme 15 wie auch die Zylinderaufnahme 30 konisch entlang der Längsachse der Formbuchse 31 ausgebildet sein, so dass die Einlegerichtung der Formbuchse 31 in die erste Aufnahme 15 bestimmt ist.

## Patentansprüche

1. Gussbefestigungsvorrichtung (2) für einen Wischarm (1), mit einer ersten Aufnahme (15) und einer zweiten Aufnahme (16), wobei in der ersten Aufnahme (15) eine Lagerbuchse (12) zur Bereitstellung einer gelenkigen Verbindung an dem Wischarm (1) angeordnet ist und in der zweiten Aufnahme (16) ein Haltestift (10) zur Befestigung einer Feder (9) des Wischarms (1) angeordnet ist, wobei über der Lagerbuchse (12) in der ersten Aufnahme (15) und/oder über dem Haltestift (10) in der zweiten Aufnahme (15, 16) ein Sicherungselement (13; 14) vorgesehen ist, das ausgelegt ist, eine Öffnung der korrespondierenden Aufnahme (15, 16) zu versperren, **dadurch gekennzeichnet, dass** das Sicherungselement (13; 14) einen Mittelteil (17) mit einem bogenförmigen Querschnitt aufweist, wobei eine dem Haltestift (10) oder der Lagerbuchse (12) zugeordneten Innenkontur (19) des Mittelteils (17) an eine korrespondierende Außenkontur des Haltestifts (10) oder der Lagerbuchse (12) angepasst ist.

2. Gussbefestigungsvorrichtung (2) nach Anspruch 1, **dadurch gekennzeichnet, dass** an dem Mittelteil (17) seitlich jeweils ein Federabschnitt (18) angeordnet ist, wobei jeder Federabschnitt (18) abstehend vom Mittelteil (17) ausgebildet und ausgelegt ist, sich in der Aufnahme (15, 16) zu verspreizen.

3. Gussbefestigungsvorrichtung (2) nach Anspruch 1 oder 2, **dadurch gekennzeichnet, dass** die Aufnahme (15, 16) eine erste Seitenwand (20) und eine zweite Seitenwand (21) aufweist, wobei die erste Seitenwand (20) zu der zweiten Seitenwand (21) V-förmig angeordnet ist, und wobei die beiden Seitenwände (20, 21) mit einem bogenförmigen Abschnitt (22) miteinander verbunden sind.

4. Gussbefestigungsvorrichtung (2) nach Anspruch 3, **dadurch gekennzeichnet, dass** die erste Seitenwand (20) der Aufnahme (15, 16) zu der zweiten Seitenwand (21) der Aufnahme (15, 16) im Wesentlichen eine Neigung von 1° bis 4° Grad aufweist.

5. Gussbefestigungsvorrichtung (2) nach einem der Anspruch 1 bis 4, **dadurch gekennzeichnet, dass** das Sicherungselement (13; 14) sich im Wesentlichen axial über die gesamte Länge der Aufnahme (15, 16) erstreckt.

6. Gussbefestigungsvorrichtung (2) nach einem der Anspruch 1 bis 5, **dadurch gekennzeichnet, dass** das Sicherungselement (13; 14) als Werkstoff einen Federstahl und/oder einen Kunststoff aufweist.

7. Wischarm (1) mit einem Befestigungsteil (4), einem Armteil (3) und einem Wischblatt (7), wobei das Befestigungsteil (4) ausgelegt ist, ein an einer Wischerwelle (5) eines Wischerantriebs (6) anliegendes Drehmoment an den Armteil (3) zu übertragen, wobei der Armteil (3) ausgelegt ist, das Wischblatt (7) an eine Windschutzscheibe eines Kraftfahrzeugs anzudrücken, und wobei das Befestigungsteil (4) eine Gussbefestigungsvorrichtung (2) nach einem der Ansprüche 1 bis 6 zur Verbindung des Befestigungsteils (4) mit dem Armteil (3) umfasst.

8. Wischarm (1) nach Anspruch 7, **dadurch gekennzeichnet, dass** die Lagerbuchse (12) zweiteilig ausgeführt ist, wobei jeweils ein Teil der Lagerbuchse (12) in einem axialen Endabschnitt der ersten Aufnahme (15) der Lagerbuchse (12) angeordnet ist.

9. Wischarm (1) nach Anspruch 7 oder 8, **dadurch gekennzeichnet, dass** die Öffnungsrichtung der ersten Aufnahme (15) und/oder der zweiten Aufnahme (16) in einem spitzen Winkel zu der am Haltestift (10) oder an der Lagerbuchse (12) angreifenden Kraft ausgerichtet ist.

## Claims

1. Cast fixing device (2) for a wiper arm (1) with a first receptacle (15) and a second receptacle (16), wherein a bearing bushing (12) for providing an articulated connection to the wiper arm (1) is arranged in the first receptacle (15), and a holding pin (10) for fastening a spring (9) of the wiper arm (1) is arranged in the second receptacle (16), wherein a securing element (13; 14) which is configured to block an opening in the corresponding receptacle (15, 16) is provided over the bearing bushing (12) in the first receptacle (15) and/or over the holding pin (10) in the second receptacle (15, 16), **characterized in that** the securing element (13; 14) has a central part (17) with an arcuate cross section, wherein an inner contour (19) of the central part (17), which inner contour is assigned to the holding pin (10) or to the bearing bushing (12), is matched to a corresponding outer contour of the holding pin (10) or of the bearing bushing (12).

2. Cast fixing device (2) according to Claim 1, **characterized in that** a spring portion (18) is in each case arranged laterally on the central part (17), wherein each spring portion (18) is formed protruding from the central part (17) and is configured to expand in the receptacle (15, 16).

3. Cast fixing device (2) according to Claim 1 or 2, **characterized in that** the receptacle (15, 16) has a first side wall (20) and a second side wall (21), wherein the first side wall (20) is arranged in a V-shaped manner with respect to the second side wall (21), and wherein the two side walls (20, 21) are inter-connected by an arcuate portion (22).

4. Cast fixing device (2) according to Claim 3, **characterized in that** the first side wall (20) of the receptacle (15, 16) is essentially at an inclination of 1° to 4° with respect to the second side wall (21) of the receptacle (15, 16).

5. Cast fixing device (2) according to one of Claims 1 to 4, **characterized in that** the securing element (13; 14) extends substantially axially over the entire length of the receptacle (15, 16).

6. Cast fixing device (2) according to one of Claims 1 to 5, **characterized in that** the securing element (13; 14) has spring steel and/or a plastic as the material.

7. Wiper arm (1) with a fastening part (4), an arm part (3) and a wiper blade (7), wherein the fastening part (4) is configured to transmit a torque applied to a wiper shaft (5) of a wiper drive (6) to the arm part (3), wherein the arm part (3) is configured to press the wiper blade (7) onto a windscreen of a motor vehicle, and wherein the fixing part (4) comprises a cast fixing device (2) according to one of Claims 1 to 6 for connecting the fixing part (4) to the arm part (3).

8. Wiper arm (1) according to Claim 7, **characterized in that** the bearing bushing (12) is of two-part design, wherein in each case one part of the bearing bushing (12) is arranged in an axial end portion of the first receptacle (15) of the bearing bushing (12).

9. Wiper arm (1) according to Claim 7 or 8, **characterized in that** the opening direction of the first receptacle (15) and/or of the second receptacle (16) is oriented at an acute angle with respect to the force acting on the holding pin (10) or on the bearing bushing (12).

## Revendications

1. Dispositif de fixation moulé (2) pour un bras d'essuie-glace (1), avec un premier logement (15) et un deuxième logement (16), dans lequel un coussinet (12) est disposé dans le premier logement (15) pour la réalisation d'une liaison articulée avec le bras d'essuie-glace (1) et une tige de maintien (10) est disposée dans le deuxième logement (16) pour la fixation d'un ressort (9) du bras d'essuie-glace (1), dans lequel il est prévu au-dessus du coussinet (12) dans le premier logement (15) et/ou au-dessus de la tige de maintien (10) dans le deuxième logement (15, 16) un élément de blocage (13; 14), qui est conçu pour fermer une ouverture du logement correspondant (15, 16), **caractérisé en ce que** l'élément de blocage (13; 14) présente une partie centrale (17) présentant une section transversale courbe, dans lequel un contour intérieur (19) de la partie centrale (17) associé à la tige de maintien (10) ou au coussinet (12) est adapté à un contour extérieur correspondant de la tige de maintien (10) ou du coussinet (12).

2. Dispositif de fixation moulé (2) selon la revendication 1, **caractérisé en ce qu'**une partie de ressort (18) est respectivement associée latéralement à la partie centrale (17), dans lequel chaque partie de ressort (18) est réalisée et conçue de façon dressée à partir de la partie centrale (17), de façon à s'écarter dans le logement (15, 16).

3. Dispositif de fixation moulé (2) selon la revendication 1 ou 2, **caractérisé en ce que** le logement (15, 16) présente une première paroi latérale (20) et une deuxième paroi latérale (21), dans lequel la première paroi latérale (20) est disposée en forme de V par rapport à la deuxième paroi latérale (21), et dans lequel les deux parois latérales (20, 21) sont reliées l'une à l'autre par une partie courbe (22).

4. Dispositif de fixation moulé (2) selon la revendication 3, **caractérisé en ce que** la première paroi latérale (20) du logement (15, 16) présente par rapport à la deuxième paroi latérale (21) du logement (15, 16) essentiellement une inclinaison de 1° à 4°.

5. Dispositif de fixation moulé (2) selon l'une quelconque des revendications 1 à 4, **caractérisé en ce que** l'élément de blocage (13; 14) s'étend essentiellement axialement sur toute la longueur du logement (15, 16).

6. Dispositif de fixation moulé (2) selon l'une quelconque des revendications 1 à 5, **caractérisé en ce que** l'élément de blocage (13; 14) présente comme matériau un acier à ressort et/ou une matière plastique.

7. Bras d'essuie-glace (1) avec une partie de fixation (4), une partie de bras (3) et un balai d'essuie-glace (7), dans lequel la partie de fixation (4) est conçue pour transmettre à la partie de bras (3) un couple de rotation appliqué à un arbre d'essuie-glace (5) d'un entraînement d'essuie-glace (6), dans lequel la partie de bras (3) est conçue pour appliquer le balai d'essuie-glace (7) sur un pare-brise d'un véhicule automobile, et dans lequel la partie de fixation (4) comprend un dispositif de fixation moulé (2) selon l'une quelconque des revendications 1 à 6 pour la liaison de la partie de fixation (4) à la partie de bras (3).

8. Bras d'essuie-glace (1) selon la revendication 7, **caractérisé en ce que** le coussinet (12) est réalisé en deux parties, dans lequel une partie du coussinet (12) est disposée respectivement dans une partie d'extrémité axiale du premier logement (15) du coussinet (12).

9. Bras d'essuie-glace (1) selon la revendication 7 ou 8, **caractérisé en ce que** la direction d'ouverture du premier logement (15) et/ou du deuxième logement (16) est orientée sous un angle aigu par rapport à la force appliquée à la tige de maintien (10) ou au coussinet (12).
